# EUROPÄISCHE PATENTSCHRIFT

(11) **EP 0 765 627 B1**
(45) Veröffentlichungstag und Bekanntmachung des Hinweises auf die Patenterteilung: **13.12.2000**
(21) Anmeldenummer: 96115053.9
(22) Anmeldetag: 19.09.1996
(51) Int. Cl.: A47L 9/10

(54) **Feinstaubsammelvorrichtung**
Device for collecting fine dust
Dispositif pour recueillir des poussières fines

(30) Priorität: 28.09.1995 DE 19536163
(43) Veröffentlichungstag der Anmeldung: 02.04.1997
(73) Patentinhaber: MERCK PATENT GmbH, 64293 Darmstadt (DE)
(72) Erfinder: Kniest, Frans M., Dr., 22969 Witzhave (DE); Blank, Kai-Uwe, 21031 Hamburg (DE)

(56) Entgegenhaltungen:
- EP-A- 0 624 340
- WO-A-93/18404

## Beschreibung

Die Erfindung betrifft eine Feinstaubsammelvorrichtung für Staubsauggeräte mit einem Staubsaugerohr zur Entnahme von Feinstaub bestehend aus mindestens einem Tubus (1) mit einer verbreiterten Öffnung (1a), einem Feinstaubsammelbehälter (2) und einem Halteband (3) zur Befestigung im Staubsaugerohr wobei der Tubus (1) mit dem aufgesteckten Feinstaubsammelbehälter (2) 60 - 180 mm lang ist, die Tubusöffnung (1a) einen um 50 - 100 % größeren Durchmesser als der Tubus selbst aufweist und der Tubusdurchmesser 5 - 25 mm beträgt, und die Feinstaubsammelvorrichtung derart in Staubsaugerohr aufgehängt werden kann; daß sich durch den Saugluftstrom im Betriebzustand ein Rütteleffekt ergibt.

Feinstaub aus Häusern, insbesondere aus Betten, Polstermöbeln und Teppichen ist vielfach die Ursache allergischer Erkrankungen. In den letzten Jahrzehnten wurde festgestellt, daß nicht der Staub als solches den Menschen sensibilisiert und später Anlaß zu allergischen Erkrankungen gibt, sondern, daß es bestimmte definierbare Bestandteile des Staubes sind, die allergisierend wirken. Die wichtigsten Innenraumallergene sind diejenigen, die auf das Vorhandensein von Hausstaubmilben zurückzuführen sind. Eine Rolle spielen aber auch die Tierhaarallergene, insbesondere diejenigen von Katzen. Die Allergene der Hausstaubmilben sind größtenteils in den Exkrementen dieser Milben vorhanden, deren Größe und Form bekannt ist. Ein Teil dieser Exkremente ist im Staub nur noch als Staubpartikel vorhanden. Sie können aber auch in dieser Form analytisch nachgewiesen werden.

Daraus ergibt sich, daß es aus diagnostischen Gründen von großem Interesse ist, anhand von Staubproben nachzuweisen, ob lebende Hausstaubmilben vorhanden sind, und somit ständig neue Allergene produziert werden oder ob tote Milben vorhanden sind, so daß mit ihren Allergenen gerechnet werden muß. Es ist ferner zu erwarten, daß bei Änderungen der Lebensbedingungen der Milben, d.h. der Luftfeuchtigkeit und der Temperatur, also beispielsweise in Abhängigkeit von der Jahreszeit, auch wieder lebende Milben an bislang milbenfreien Stellen auftreten können, so daß der Test von Zeit zu Zeit wiederholt werden muß. Schließlich ist es wichtig festzustellen, ob im Staub Allergene gefunden werden bzw. ob andere milben-typische Stoffwechselprodukte, wie z.B. Guanine, als Indikatoren für Allergene vorliegen.

Alle diese Bestandteile finden sich bevorzugt in der feinen Fraktion des Hausstaubes, dem sogenannten Feinstaub. Somit besteht ein besonderes Interesse daran, diese Fraktion gezielt zu sammeln, um sie untersuchen zu können. Diese Problemstellung führte zu der vorliegenden Erfindung.

Für den Nachweis von Milben und insbesondere von allergenhaltigem Hausstaub gibt es im Handel einen Fertigtest, den sogenannten Acarex Test®, bestehend aus einer Testflüssigkeit und entsprechenden Teststäbchen. Der Acarex Test® ist ebenfalls patentgeschützt (EP 0 144 820, EP 0 152 068, EP 0 174 448). Zur Durchführung dieses Tests benötigt man Hausstaub, der in der Regel dem Staubsaugerbeutel entnommen wird. Da dieser Test gerade dann durchgeführt werden muß, wenn Menschen unter Allergien leiden, die durch Hausstaubmilben bzw. den dadurch freigesetzten Allergenen verursacht werden, ist es nicht zumutbar, den Staubsaugerbeutel direkt zur Probennahme zu verwenden. Außerdem ist der Test aus den genannten Gründen vorzugsweise mit Feinstaub durchzuführen, der in der Regel im Staubsack nur in einer Mischung mit Grobstaub, welcher das Testergebnis erheblich verschleiern kann, vorliegt.

Staub ist ein sehr inhomogenes Gebilde, welches hauptsächlich Mineralien, Fasern und allergenhaltige Bestandteile, wie z. B. Milbenkot, enthält. Stäube aus Teppichen sind anders zusammengesetzt als solche aus dem Betten- oder Polstermöbelbereich, d. h. die Grob- und Feinstaubanteile variieren stark. Der Grobstaub besteht hauptsächlich aus grobfaserigen Material und sogenannten Flusen, während der Feinstaub die mineralischen und allergenhaltigen Bestandteile enthält. Die mineralische Fraktion bestimmt das spezifische Gewicht des Staubes. Im Sinne der vorliegenden Erfindung ist der Feinstaub als mineralische/allergenhaltige Fraktion und der Grobstaub als Zusammenballung von grobfaserigem Material und Flusen zu verstehen. Die Trennung durch die erfindungsgemäße Feinstaubsammelvorrichtung erfolgt derart, daß der Grobstaub vom Feinstaub, gemäß den vorstehenden Definitionen, separiert wird. Zusätzlich werden dabei die an dem Grobstaub haftenden allergenhaltigen und/oder mineralischen Feinstaubbestandteile durch den Rütteleffekt abgetrennt.

Man kennt bereits verschiedene Lösungsvorschläge, wie Staub gesammelt und teilweise auch schon darin befindliche Allergene nachgewiesen werden können. Diese Methoden sind jedoch entweder im Haushalt nicht direkt von Laien durchführbar und/oder besitzen andere Nachteile, wie sie nachfolgend aufgezeigt werden.

Einen Weg zum direkten Nachweis von Allergenen der nicht zur Gewinnung von Feinststaub führt, wird in WO 93/18404 beschrieben. Hier wird eine Vorrichtung in das Staubsaugrohr eingebracht, die eine Flüssigkeit enthält, in der sich ein Nylonnetz befindet, das bereits mit Antikörpern zu den zu erwartenden Allergenen der Hausstaubmilben beschichtet ist. Diese Antikörper halten die Allergene fest, die zufällig auf sie treffen, wenn Staub eingesaugt wird. Später erfolgt im Labor der qualitative und/oder quantitative Nachweis der Allergene mit Hilfe eines sogenannten Immuno-Assays. Es wird somit kein Feinststaub gesammelt, sondern es werden Allergene nachgewiesen. Dazu benutzt man Standardmethoden, die nur in speziellen Labors durchgeführt werden können. Wichtige Bestandteile des Feinstaubes im Hinblick auf Allergien, wie z.B. tote oder lebende Milben oder intakte Milbenexkremente können so nicht gefunden werden. Die Methode ist zudem recht unpräzise, da nur bei höheren Allergenkonzentrationen ein positiver Nachweis erfolgen kann.

Bei den beiden Schutzrechten DE 41 28 413 und EP 0 529 394 geht es tatsächlich darum, Feinstaub zu gewinnen.

In DE 41 28 413 wird ein spezieller Probesammelbeutel beschrieben, der im Saugluftstrom des Staubsaugers vor dem eigentlichen Staubbeutel angeordnet ist. Der Probensammelbeutel hat eine andere Porengröße als der Staubbeutel und gestattet eine bessere Entnahme des Feinstaubs, der sich bevorzugt in eine Vertiefung des Probenbeutels sammelt. Diese Vorrichtung verbessert zwar ein Problem, das sich bei der Feinstaubentnahme aus dem normalen Staubbeutel wie sie bisher empfohlen wurde, ergibt. Sie löst es aber nur teilweise, denn der im Probensammelbeutel befindliche Staub ist nach wie vor mit Grobstaub gemischt und muß von diesem getrennt werden, um eine adäquate Staubprobe zur Durchführung eines Tests zu erhalten. Das Risiko für sensibiliserte Personen ist zwar vermindert, bleibt aber derinoch bestehen. Da auch der kleinere Probebeutel - ebenso wie der eigentliche Staubbeutel - vom gesamten Querschnitt des Saugrohres gespeist wird, besteht zudem die Gefahr des Überfüllens und Verstopfens.

In der in EP 0 529 394 beschriebenen Erfindung wird gänzlich auf den Staubsaugebeutel verzichtet. Es wird hierbei in den gesamten Querschnitt des Saugrohres eine Vorrichtung eingesetzt, um den Grobstaub vom gewünschten Feinstaub zu trennen. Der Feinstaub kann mit Hilfe eines Behälters, der an der Unterseite der Vorrichtung angebracht ist, entnommen werden. Die beschriebene Vorrichtung führt aber ebenfalls zu Komplikationen, da der Grobstaub, hauptsächlich Flusen, durch ein Sieb zurückgehalten und dort gesammelt wird. Dies führt aber innerhalb kurzer Zeit zum Verstopfen des Saugrohres und damit auch zur Unterbrechung des Staubsammelns. Um die Vorrichtung dann wieder in den Betriebszustand zu versetzen, muß das Saugrohr geöffnet werden.

Bei beiden Lösungsvorschlägen treten also gravierende Probleme bei der Durchführung des Staubsammelns auf. Zum einen kommt es leicht zur Verstopfung des Saugrohres bzw. der Vorrichtung, zum anderen wird oftmals nur eine unzureichende Mischung aus Grob- und Feinstaub erhalten. Dies führt dann zu einer Überlastung des Staubsaugers bzw. zu einer Unterbrechung des Staubsammelvorganges. Zum Beheben dieser Unterbrechung muß das Staubsaugerrohr zwangsläufig geöffnet und die Sammelvorrichtung gereinigt und entleert werden. Abgesehen von dieser lästigen Unterbrechung des Staubsammelvorganges, bedeutet dies eine unangenehme Manipulation, die zudem für Allergiker ein ausgesprochenes Risiko darstellt, da es beispielsweise zu Asthmaanfällen oder anaphylaktischen Schockzuständen kommen kann. Gerade sensibilisierte Menschen sind aber darauf angewiesen, die Belastung in ihrer häuslichen Umgebung von Zeit zu Zeit selbständig zu überprüfen, um rechtzeitig entsprechende Maßnahmen zur Entfernung von Allergenquellen ergreifen zu können.

Aus der EP-A-624 340 ist ein abnehmbares antibakterielles Filtersystem bekannt, das auf einem Atmungsmeßgerät angebracht ist.

Aufgabe der vorliegenden Erfindung ist es deshalb, eine Feinstaubsammelvorrichtung zu entwickeln, die es erlaubt, eine geeignete Menge Feinstaub zur Durchführung eines Allergentests auf einfache Weise in jedem Haushalt mit einem handelsüblichen Staubsauger zu sammeln, wobei die oben aufgezeigten Probleme des Standes der Technik vermieden werden sollen und die Feinstaubentnahme auf hygienisch einwandfreie Weise, ohne die genannten Risiken, erfolgen kann.

Die Lösung dieser Aufgabe erfolgt durch die Bereitstellung der erfindungsgemäßen Feinstaubsammelvorrichtung gemäß Anspruch 1 und den davon abhängigen Ansprüchen, wobei die Vorrichtung nicht den gesamten Querschnitt des Saugrohres beansprucht, sondern freibeweglich darin aufgehängt ist. Die freibeweglich aufgehängte Feinstaubsammelvorrichtung für Staubsaugegeräte zur Entnahme von Feinstaub, welche lediglich 5 - 40 % des Staubsaugerrohrquerschnitts beansprucht, besteht mindestens aus einen Tubus (1) mit einer verbreiterten Öffnung (1a), einem Feinstaubsammelbehälter (2) und einem Halteband (3). Die Feinstaubsammelvorrichtung wird mit dem Halteband (3) in dem Staubsaugerrohr freibeweglich aufgehängt und kann ohne Adapter in jedem handelsüblichen Staubsauger eingesetzt werden, ohne daß dessen Funktion bzw. der Vorgang des Feinstaubsammelns negativ beeinflußt wird. Die Feinstaubsammelvorrichtung wird dabei mit dem Halteband (3) derart zwischen zwei Saugrohrabschnitte oder zwischen Saugrohr und Staubsaugergehäuse durch Einklemmen freibeweglich aufgehängt, daß der Saugluftstrom zuerst die Öffnung (1a) des Tubus (1) trifft bzw. passiert.

Überraschenderweise zeigt sich dabei, daß genügend Feinstaub gewonnen wird, vorausgesetzt, daß überhaupt Feinstaub im abgesaugten Objekt vorhanden ist. Ferner kann mit der eingebauten Feinstaubsammelvorrichtung beliebig lange ohne Verstopfungsgefahr gesaugt werden. Der größte Teil der Fläche des Rohrquerschnittes steht immer zur Verfügung. Der Tubus (1) der Feinstaubsammelvorrichtung ist 60 - 180 mm lang und besitzt einen Tubusdurchmesser von 5 - 25 mm. Die Tubusöffnung (1a) hat bevorzugt einen um 50 - 100 % größeren Durchmesser als der Tubus selbst.

Die Feinstaubsammelvorrichtung ist vorzugsweise aus Kunststoff gefertigt, wobei die Art des Materiales nicht kritisch ist, vorzugsweise aber ein leichter Kunststoff, wie z.B. Polyethylen verwendet wird.

Die erfindungsgemäße Sammelvorrichtung hat im Tubus- und Sammelbehälterbereich vorzugsweise den Querschnitt eines Reagenzglases, insbesondere einen Durchmesser von 8 - 15 mm und besitzt besonders bevorzugt eine Gesamtlänge, gemessen vom oberen Rand der Tubusöffnung (1a) bis zum unteren Rand des Feinstaubsammelbehälters (2) von 100 - 120 mm. Die erfindungsgemäße Sammelvorrichtung wird mit Hilfe einfacher Halterungsstreifen (3) in das Saugrohr eingesetzt. Das Halteband (3) wird an der Vorrichtung so befestigt, daß der umgefaltete gezackte Bereich (3a) des Bandes über die Enden (1b) des Tubus (1) gelegt werden, wobei dieses dann durch Aufstecken des Feinstaubsammelbehälters (2) fixiert und auch befestigt wird.

Zur Befestigung der Feinstaubsammelvorrichtung im Staubsaugerrohr wird die Vorrichtung zweckmäßigerweise mit dem geschlossenen Ende (Staubsammelbehälter (2)) in den aus dem Staubsaugergehäuse herausragenden Rohrabschnitt eingelassen, so daß die beiden Enden des Bandes (3b) herausragen. Diese werden dann durch Aufstecken des eigentlichen Saugrohres, welches mit der Ansaugdüse verbunden wird, befestigt, indem man das Halteband (3) mit den beiden zusammenzusteckenden Rohrteilen festklemmt.

Die Tubusöffnung (1a) liegt in der Saugrichtung, so daß der Feinstaub in den Feinstaubsammelbehälter (2) eindringen kann. Der Feinstaubsammelbehälter (2) ist in der Regel luftdicht mit dem Tubus (1) verbunden. Eine besondere Ausgestaltungsform kann jedoch auch im Verbindungungsbereich des Tubus (1) mit dem Feinstaubsammelbehälter (2) über kleine Öffnungen verfügen, über die der eventuell ungewünschte Luftstau beseitigt werden kann, die jedoch so angeordnet sind, daß der gesammelte Feinstaub nicht entweicht.

Die Vorrichtung behält dabei eine große Bewegungsfreiheit und wird vom Saugluftstrom im Staubsauger erheblich gerüttelt. Dieser Rütteleffekt führt dazu, daß der Feinstaub in den am tiefsten Punkt der Vorrichtung angebrachten Sammelbehälter (2) eingetragen wird, wo er dann bei Bedarf für die weiteren Untersuchungen, z.B. den Acarex Test® entnommen werden kann.

Das Rütteln führt bei der vorliegenden Erfindung darüber hinaus dazu, daß der Grobstaub besser vom Feinstaub, der eigentlich gewonnen werden soll, befreit wird. Der verkleinerte Sammelquerschnitt der Vorrichtung im Vergleich zum Staubsaugerrohrquerschnitt begünstigt die Trennung von Fein- und Grobstaub besonders.

Der Rütteleffekt hat ferner zur Folge, daß sich der flusenhaltige Grobstaub kugelförmig zusammenballt. Dies wiederum ermöglicht dem Feinstaub einen besseren Durchgang. Auch bei der erfindungsgemäßen Feinstaubsammelvorrichtung ist es möglich, daß in die Tubusöffnung (1a) zur Zurückhaltung und Abtrennung des Grobstaubs ein Sieb oder ein Rost (4) lose eingesetzt oder fest eingearbeitet wird. Dies ist eine besondere Ausgestaltung der Erfindung und nicht zwingend notwendig, um ein zufriedenstellendes Ergebnis zu erhalten. Dennoch erweist sich die Verwendung eines Siebes (4) oder eines Rostes (4) bei der Anwendung in bestimmten Staubsaugertypen als besonders vorteilhaft.

Der Grobstaub wird dann auf dem Sieb oder Rost festgehalten, von wo er - zusammengeballt - fast ohne Staubaufwirbeln entommen werden kann. Durch das Rütteln wird er ohnehin bereits vom aufwirbelbaren Feinstaub befreit.

Rund um die Feinstaubsammelvorrichtung ist genügend Raum, so daß der Saugluftstrom vorbeiströmen kann. Nur die zufällig in den Tubus (1) einfallenden Staubpartikel werden gesammelt. Die Feinstaubteilchen fallen in den Fein-staubsammelbehälter (2) und lagern sich ab, denn hier ist kein Saugluftstrom mehr vorhanden. Eine sehr kleine Fraktion Grobstaub ballt sich in der Regel im Tubus (1), bzw. bei Verwendung eines Siebes (4) oder Rostes (4), auf diesem, zusammen. Meist werden diese Grobstaubanteile aber wieder aus dem Tubus (1) bzw. von dem Sieb (4) oder Rost (4) durch die beim Saugen auftretenden turbulenten Luftströme entfernt und in den eigentlichen Staubsack des Saugers befördert. Der aufgefangene Feinstaub verbleibt bis zu einer gewissen Füllhöhe, die völlig für nachfolgende Testuntersuchungen ausreicht, im Feinstaubbehälter (2) und kann aus diesem entnommen werden. Ein Saugvorgang von zwei bis zehn Minuten reicht in der Regel aus, um eine ausreichende Staubmenge - z.B. für den Acarex Test® - zu sammeln. Zu der Feinstaubsammelvorrichtung kann ferner ein kleiner Deckel gehören, der bei der Entnahme des Teiles aus dem Staubsaugerrohr zur Abdeckung der Probe bzw. der Vorrichtung verwendet werden kann. Die Feinstaubsammelvorrichtung kann nach Gebrauch mit Wasser ausgespült und somit mehrfach verwendet werden.

Die Erfindung soll nachstehend anhand von Zeichnungen eines bevorzugten Ausführungsbeispiels zusätzlich erläutert werden, ohne jedoch die Erfindung darauf zu beschränken. Die zugehörigen Zeichnungen zeigen:
- Fig. 1: Feinstaubsammelvorrichtung ohne Halteband bestehend aus einen Tubus (1) mit einer verbreiterten Öffnung (1a), einem Feinstaubsammelbehälter (2) und einem Sieb (4), welches nicht zwingend erforderlich ist. Der Feinstaubsammelbehälter (2) wird auf das Ende (1b) des Tubus (1) aufgesteckt, wobei bei Benutzung das Halteband (3) - siehe Zeichnung 2 - wie oben beschrieben, eingeklemmt werden kann.
- Fig. 2: Halteband (3) mit dem gezackten Steg (3a) sowie den für die Befestigung maßgeblichen oberen Enden (3b).

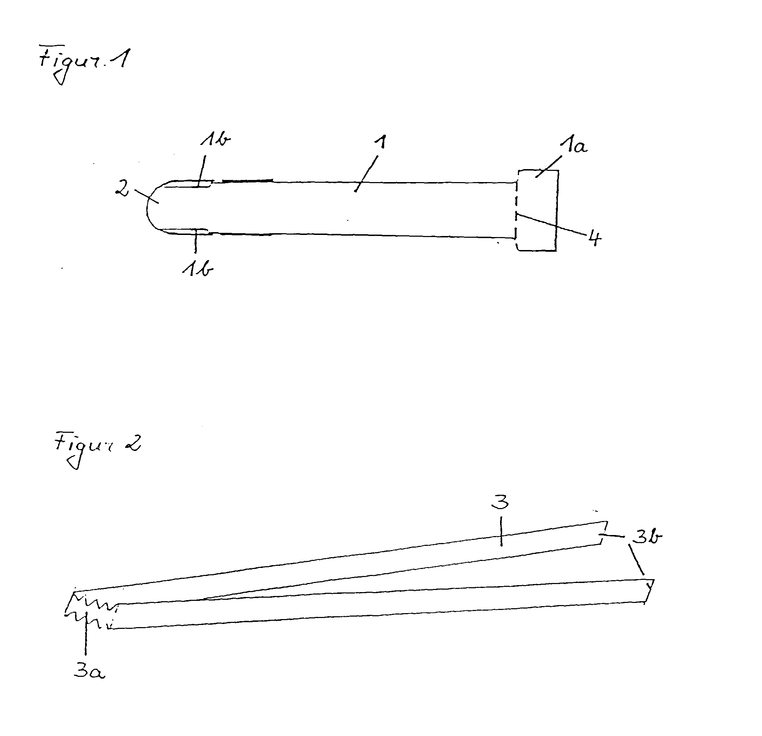

## Patentansprüche

1. Feinstaubsammelvorrichtung für Staubsauggeräte mit einem Staubsaugerohr zur Entnahme von Feinstaub bestehend aus mindestens einem Tubus (1) mit einer verbreiterten Öffnung (1a), einem Feinstaubsammelbehälter (2) und einem Halteband (3) zur Befestigung im Staubsaugerohr wobei der Tubus (1) mit dem aufgesteckten Feinstaubsammelbehälter (2) 60 - 180 mm lang ist, die Tubusöffnung (1a) einen um 50 - 100 % größeren Durchmesser als der Tubus selbst aufweist und der Tubusdurchmesser 5 - 25 mm beträgt, und die Feinstaubsammelvorrichtung derart im Staubsaugerohr aufgehängt werden kann; daß sich durch den Saugluftstrom im Betriebzustand ein Rütteleffekt ergibt.

2. Feinstaubsammelvorrichtung nach Anspruch 1, dadurch gekennzeichnet, daß das Halteband (3) zwischen Tubus (1) und Feinstaubsammelbehälter (2) eingeklemmt ist.

3. Feinstaubsammelvorrichtung nach Anspruch 1 oder 2, dadurch gekennzeichnet, daß in die Tubusöffnung (1a) zur Zurückhaltung und Abtrennung des Grobstaubs ein Sieb oder ein Rost (4) lose eingesetzt oder fest eingearbeitet ist.

4. Feinstaubsammelvorrichtung nach Anspruch 3, dadurch gekennzeichnet, daß das Halteband (3) durch einen gezackten Steg (3a) so gestaltet und eingesetzt wird, daß dieser Steg (3a) einen Rost (4) ersetzt.

5. Feinstaubsammelvorrichtung nach einem oder mehreren der vorhergehenden Ansprüche, dadurch gekennzeichnet, daß sie wiederverwendbar ist.

6. Feinstaubsammelvorrichtung nach einem oder mehreren der vorhergehenden Ansprüche, dadurch gekennzeichnet, daß sie aus Kunststoff gefertigt ist.

7. Feinstaubsammelvorrichtung nach einem oder mehreren der vorhergehenden Ansprüche, dadurch gekennzeichnet, daß sie kleine Öffnungen zur Erleichterung des Luftdurchgangs und Beseitigung eines Luftstaus im Tubus (1) besitzt.

## Claims

1. Fine-dust collecting device for vacuum cleaners having a vacuum cleaner pipe for removing fine dust comprising at least one tube (1) with a widened orifice (1a), a fine-dust collecting container (2), and a holding strap (3) for attachment in the vacuum cleaner pipe, the tube (1) with the fine-dust collecting container (2) fitted on being 60-180 mm long, the tube orifice (1a) having a diameter which is 50-100% larger than the tube itself, and the tube diameter being 5-25 mm, and it being possible to suspend the fine-dust collecting device in the vacuum cleaner pipe in such a way that a vibrating effect results due to the suction-air flow in the operating state.

2. Fine-dust collecting device according to Claim 1, characterized in that the holding strap (3) is clamped between the tube (1) and the fine-dust collecting container (2).

3. Fine-dust collecting device according to Claim 1 or 2, characterized in that a screen or a grate (4) is inserted loosely or incorporated fixedly in the tube orifice (1a) to retain and separate the coarse dust.

4. Fine-dust collecting device according to Claim 3, characterized in that the holding strap (3) is configured and inserted by means of a zigzag web (3a) in such a way that the said web (3a) replaces a grate (4).

5. Fine-dust collecting device according to one or more of the preceding claims, characterized in that it is reusable.

6. Fine-dust collecting device according to one or more of the preceding claims, characterized in that it is produced from plastic material.

7. Fine-dust collecting device according to one or more of the preceding claims, characterized in that it has small perforations to facilitate the passage of air and the removal of an accumulation of air in the tube (1).

## Revendications

1. Dispositif de collecte de poussière fine pour aspirateurs, comportant une tubulure d'aspiration servant à retirer la poussière fine, constitué par au moins un tube (1) possédant une ouverture élargie (1a), un récipient (2) de collecte de la poussière fine et une bande de retenue (3) servant à fixer la tubulure d'aspiration, et dans lequel le tube (1), sur lequel est emmanché le récipient (2) de collecte de la poussière fine, a une longueur de 60-180 mm, l'ouverture (1a) du tube possède un diamètre supérieur de 50 à 100 % au diamètre du tube lui-même et le diamètre du tube est égal à 5-25 mm, et le dispositif de collecte de poussière fine peut être suspendu dans la tubulure d'aspiration de telle sorte que l'effet de secouage pendant l'état de fonctionnement est obtenu sous l'effet du courant d'air d'aspiration.

2. Dispositif de collecte de poussière fine selon la revendication 1, caractérisé en ce que la bande de retenue (3) est serrée entre le tube (1) et le récipient (2) de collecte de la poussière fine.

3. Dispositif de collecte de poussière fine selon la revendication 1 ou 2, caractérisé en ce qu'un tamis ou une grille (4) est inséré de façon lâche ou est monté de façon fixe dans l'ouverture (1a) du tube de manière à retenir et séparer la poussière grossière.

4. Dispositif de collecte de poussière fine selon la revendication 3, caractérisé en ce que la bande de retenue (3) comporte une barrette dentée (3a) et est utilisée de telle sorte que cette barrette (3a) remplace une grille (4).

5. Dispositif de collecte de poussière fine selon une ou plusieurs des revendications précédentes, caractérisé en ce qu'il est réutilisable.

6. Dispositif de collecte de poussière fine selon une ou plusieurs des revendications précédentes, caractérisé en ce qu'il est réalisé en matière plastique.

7. Dispositif de collecte de poussière fine selon une ou plusieurs des revendications précédentes, caractérisé en ce qu'il comporte de petites ouvertures destinées à faciliter le passage de l'air et à éliminer une accumulation d'air dans le tube (1).
